# EUROPÄISCHE PATENTSCHRIFT

(11) **EP 3 510 062 B1**
(45) Veröffentlichungstag und Bekanntmachung des Hinweises auf die Patenterteilung: **21.02.2024**
(21) Anmeldenummer: 17758899.3
(22) Anmeldetag: 05.09.2017
(51) Int. Cl.: C08F 20/18, B01J 19/24, C08F 2/01, C08F 2/04, C08F 20/10, C08F 265/06

(54) **VERFAHREN UND SYSTEM ZUR POLYMERISATION VON ACRYLATEN**
METHOD AND SYSTEM FOR POLYMERIZING ACRYLATES
PROCÉDÉ ET SYSTÈME DE POLYMÉRISATION D'ACRYLATES

(30) Priorität: 06.09.2016 EP 16187329
(43) Veröffentlichungstag der Anmeldung: 17.07.2019
(73) Patentinhaber: INEOS Styrolution Group GmbH, 60325 Frankfurt am Main (DE)
(72) Erfinder: FISCHER, Wolfgang, 69190 Walldorf (DE); ITTEMANN, Peter, 67125 Dannstadt-Schauernheim (DE); PATCAS, Florian, 67065 Ludwigshafen (DE); RUF, Michael, 68723 Schwetzingen (DE)
(74) Vertreter: Jacobi, Markus Alexander
(86) Internationale Anmeldenummer: PCT/EP2017/072167
(87) Internationale Veröffentlichungsnummer: WO 2018/046470

(56) Entgegenhaltungen:
- US-A- 3 825 512
- US-A- 3 891 603
- US-A- 4 555 384
- US-A- 4 657 994

## Beschreibung

Die Erfindung betrifft ein Verfahren zur Polymerisation von Acrylaten mittels eines Reaktors, wobei in dem Reaktor entstehende Reaktionswärme über einen Siedekühler abgeführt wird, indem in dem Reaktor entstehende gasförmige Brüden dem Siedekühler zugeführt werden, und kondensierte Brüden von dem Siedekühler in den Reaktor zurück geführt werden. Die Erfindung betrifft auch ein System zur Polymerisation eines Acrylats (Herstellung eines Polyacrylats), umfassend einen Reaktor und einen Siedekühler zur Abführung von in dem Reaktor entstehender Reaktionswärme.

Es ist bekannt, Acrylate, insbesondere n-Butylacrylat, in einem Reaktor, welcher ein Rührwerk aufweist, zu polymerisieren. Ein solcher Reaktor wird in der Literatur auch als "CSTR" (continuous stirred tank reactor) bezeichnet. Dabei wird mindestens eine Komponente, enthaltend mindestens ein Acrylat, also ein Monomer, dem Reaktor zugeführt, und innerhalb des Reaktors findet dann eine Polymerisation statt.

Ein Reaktor für Polymerisationen wird beispielsweise in EP-A 0865820 offenbart. Der Reaktor umfasst einen Deckel, einen Boden sowie ein Rührwerk. Der Reaktor umfasst Zuleitungen, über welche die Komponenten dem Reaktor zugeführt werden. In dem Reaktor findet die Polymerisation statt, und das entstandene Polymer wird über Ableitungen aus dem Reaktor entnommen.

Aus EP-B 1297038 ist es bekannt, kautschukhaltige Styrol-Copolymere wie beispielsweise Acrylnitril-Styrol-Acrylat (ASA) herzustellen, wobei die Copolymere aus einer Kautschukphase und einer auf die Kautschukphase aufgepfropften Hartphase aufgebaut sind. Als Kautschukphase eignen sich unter anderem Acrylatkautschuke. Die Kautschukphase wird typischerweise durch Polymerisation von Acrylaten und oftmals vernetzenden Monomeren hergestellt.

US 3,891,603 A offenbart ein Verfahren zur Herstellung von Ethylen-haltigen Copolymeren mittels eines Reaktors. US 3,825,512 A offenbart ein System zur Herstellung von Vinylchlorid-Copolymer. US 4,657,994 A offenbart ein System zur Herstellung von Ethylen-Vinylacetat-Copolymeren und US 4,555,384 A offenbart ein Verfahren und ein System zur Herstellung eines Polymers, insbesondere Styrol-Acrylnitril-Copolymer (SAN), aus Monomeren. In einem Reaktor entstehende Reaktionswärme wird jeweils über einen Siedekühler abgeführt.

Die Polymerisation ist in der Regel eine exotherme Reaktion, es entsteht Reaktionswärme, die beispielsweise über einen Siedekühler abgeführt werden kann. Als Siedekühler kommt bevorzugt ein Rohrbündelwärmetauscher in Frage. In dem Siedekühler steigen die in dem Reaktor entstehenden gasförmigen Brüden in Rohren auf. Die Rohre werden dabei von einem Kühlmittel umspült. Dadurch kondensieren die Brüden, und die kondensierten Brüden werden in den Reaktor zurückgeführt.

Bei der Herstellung des Polymers in dem Reaktor bildet sich auch in dem Siedekühler Polymer. Durch das sich bildende Polymer kann es zu Verstopfungen von Rohren des Siedekühlers kommen.

Dadurch wird die Abfuhr der Reaktionswärme aus dem Reaktor erschwert. Insbesondere ist die Temperaturkontrolle des Reaktors erschwert, was zu negativen Auswirkungen auf die Produktqualität führen kann.

Der Erfindung liegt als eine Aufgabe zugrunde, bei der Polymerisation eines Acrylats mittels eines Reaktors und eines Siedekühlers die Bildung von Polymerprodukt im Siedekühler zu verringern oder zu vermeiden.

Diese Aufgabe wird erfindungsgemäß durch ein Verfahren zur Polymerisation eines Acrylats mittels eines Reaktors und eines Siedekühlers mit den speziellen Merkmalen der Ansprüche gelöst.

Die Erfindung betrifft insbesondere ein Verfahren zur Polymerisation von Acrylaten mittels eines Reaktors (50), wobei in dem Reaktor (50) entstehende Reaktionswärme über einen Siedekühler (40) abgeführt wird, indem in dem Reaktor (50) entstehende gasförmige Brüden dem Siedekühler (40) zugeführt werden, und kondensierte Brüden von dem Siedekühler (40) in den Reaktor (50) zurück geführt werden, wobei mindestens eine Komponente, enthaltend Acrylat zumindest teilweise über den Siedekühler (40) zugegeben wird und über den Siedekühler (40) in den Reaktor (50) gelangt und in dem Reaktor (50) ein verminderter Druck, insbesondere in einem Bereich zwischen 150 mbar und 350 mbar, erzeugt wird, und wobei während der Polymerisation des Acrylats in dem Reaktor (50) ein im Vergleich zum atmosphärischen Luftdruck verminderter Druck herrscht.

Gemäß einem gattungsgemäßen Verfahren zur Polymerisation eines Acrylats mittels eines Reaktors wird in dem Reaktor entstehende Reaktionswärme über einen Siedekühler abgeführt, indem in dem Reaktor entstehende gasförmige Brüden dem Siedekühler zugeführt werden, und kondensierte Brüden von dem Siedekühler in den Reaktor zurück geführt werden.

Erfindungsgemäß wird dabei mindestens eine Komponente enthaltend Acrylat (oder bestehend aus Acrylat), also ein Monomer (Monomer-Typ), zumindest teilweise über den Siedekühler zugegeben und gelangt von dem Siedekühler in den Reaktor, wo die Polymerisation stattfindet. Typischerweise erfolgt die Polymerisation mittels Emulsionspolymerisation in wässriger Phase unter Zugabe eines Emulgators und eines radikalischen Initiators. Geeignete Emulgatoren und Initiatoren sind beispielsweise in EP-B 1297038 beschrieben. Es wird insbesondere ein Acrylatpolymer, insbesondere ein vernetztes Acrylatpolymer, in Form eines Latex erhalten (Acrylatkautschuk).

Das Acrylatpolymer wird dabei vorzugsweise in mindestens einem weiteren Schritt mit einer weiteren Komponente gepfropft. Die weitere Komponente enthält ein oder mehrere Monomere, insbesondere ausgewählt aus Styrol, Acrylnitril, Methylmethacrylat.

Die Standzeit eines Siedekühlers kann deutlich verlängert werden, wenn die mindestens eine Komponente enthaltend Acrylat zumindest teilweise über den Siedekühler zugeführt wird und von dem Siedekühler in den Reaktor gelangt. Bei aus dem Stand der Technik bekannten Verfahren wird die Komponente direkt in den Reaktor eingefüllt. Die Standzeit ist dabei die Zeit, während welcher mittels des Reaktors und des Siedekühlers Acrylat polymerisiert werden kann. Die Standzeit endet vorliegend, wenn sich in dem Siedekühler so viel Polymer gebildet hat, dass die Wärmeabfuhr durch den Siedekühler so stark behindert ist, dass die Temperaturkontrolle des Reaktors beeinflusst wird, und das in dem Siedekühler gebildete Polymer aus dem Siedekühler entfernt werden muss.

Die mindestens eine Komponente, die den Siedekühler eingefüllt wird, enthält vorzugsweise mindestens ein C₁-C₈-Alkyl(meth)acrylat, bevorzugt mindestens ein C₄-C₈-Alkyl(meth)acrylat, insbesondere bevorzugt n-Butylacrylat und/oder 2-Ethylhexylacrylat, besonders bevorzugt ausschließlich n-Butylacrylat, als Monomer. Hierbei umfasst der Ausdruck (Meth)acryl, beispielsweise in der Bezeichnung (Meth)acrylat, die entsprechenden Acryl- und/oder Methacryl-Verbindungen.

Die mindestens eine Komponente liegt somit bevorzugt in flüssiger Form vor und fließt somit in den Siedekühler hinein.

Gemäß einer vorteilhaften Weiterbildung der Erfindung wird eine weitere Komponente, enthaltend mindestens ein polyfunktionales, vernetzendes Monomer; bevorzugt ausgewählt aus Allyl(meth)acrylat (AMA), Divinylbenzol, Diallylmaleat, Diallylfumarat, Diallylphthalat, Triallylcyanurat, Triallylisocyanurat und Dicyclopentadienylacrylat (DCPA); besonders bevorzugt aus AMA und DCPA, zumindest teilweise über den Siedekühler zugegeben. Ein polyfunktionales vernetzendes Monomer umfasst zwei oder mehr, bevorzugt zwei oder drei, insbesondere bevorzugt genau zwei, ethylenische Doppelbindungen, welche bevorzugt nicht 1,3-konjugiert sind. Bevorzugt wird das vernetzende Monomer als weitere Komponente in einer Menge 0,1 bis 5 Gew.-%, bevorzugt 0,5 bis 3 Gew.-%, besonders bevorzugt 1 bis 2,5 Gew.-%, bezogen auf die gesamte Menge der eingesetzten Monomere, eingesetzt.

Als Monomere können neben dem mindestens einen Acrylat, bevorzugt ausgewählt aus C₁-C₈-Alkyl(meth)acrylaten, und dem polyfunktionalen vernetzenden Monomer optional ein oder mehrere weitere copolymerisierbare, monoethylenisch ungesättigte Monomere als weitere Komponenten eingesetzt werden. Beispielsweise können ein oder mehrere Monomere ausgewählt aus Butadien, Isopren, Styrol, Acrylnitril, Methylmethacrylat und Vinylmethylether eingesetzt werden.

Geeignete Monomere und Zusammensetzungen werden z.B. in WO 2015/150223 und WO 2015/078751 beschrieben. Die Monomere (Komponenten) können bevorzugt, zumindest teilweise, als Mischung oder getrennt in den Reaktor zugeführt werden.

Gemäß einer bevorzugten Ausgestaltung der Erfindung wird die mindestens eine Komponente zumindest teilweise von oben durch eine Haube des Siedekühlers in den Siedekühler zugegeben. Die Haube des Siedekühlers ist dabei in einem oberen Bereich angeordnet und schließt den Siedekühler nach oben ab. Die mindestens eine Komponente wird somit mit der Schwerkraft in den Siedekühler eingebracht und fällt aufgrund der Schwerkraft in den Siedekühler hinein.

Gemäß einer besonders bevorzugten Ausgestaltung der Erfindung wird die mindestens eine Komponente zumindest teilweise von oben in mehrere vertikal verlaufende Rohre des Siedekühlers zugegeben. In diesen Rohren kondensieren die aus dem Reaktor aufsteigenden Brüden. Die mindestens eine Komponente wird also derart in den Siedekühler zugegeben, dass die mindestens eine Komponente in die besagten Rohre gelangt.

Die bei der in dem Reaktor stattfindenden Polymerisation entstehenden gasförmigen Brüden steigen entgegen der Schwerkraft in den vertikal verlaufenden Rohren des Siedekühlers auf und kondensieren in dem Siedekühler. Die kondensierten Brüden fließen anschließend mit der mindestens einen Komponente mit der Schwerkraft in den Reaktor zurück.

In dem Reaktor wird ein im Vergleich zum atmosphärischen Luftdruck verminderter Druck, insbesondere in einem Bereich zwischen 150 mbar und 350 mbar, erzeugt. Dabei wird der Reaktor vorzugsweise durch den Siedekühler mittels einer Vakuumpumpe über eine Unterdruckleitung evakuiert. Beim Evakuieren des Reaktors durch den Siedekühler kann Polymerisat aus dem Siedekühler in Richtung zu der Vakuumpumpe mitgerissen werden, was zu Verstopfungen der Unterdruckleitung führen kann. Um dies zu verhindern ist eine Bypassleitung vorgesehen. Die Bypassleitung wird bevorzugt zum Evakuieren des Reaktors verwendet, bevor die Polymerisation in dem Reaktor stattfindet.

Vorzugsweise wird die Polymerisation des Acrylats in dem Reaktor als diskontinuierlicher Prozess durchgeführt. Ein solcher diskontinuierlicher Prozess wird auch als Batchprozess oder Chargenprozess bezeichnet. Dabei werden zunächst alle für die Polymerisation benötigten Komponenten, die Monomere enthalten, sowie weitere Stoffe, über den Siedekühler oder direkt in den Reaktor eingefüllt, und in dem Reaktor findet die Polymerisation des Acrylats statt. Dabei erfolgt eine Umsetzung der Monomere zu, zumindest annähernd, 100%. Der hergestellte Acrylatkautschuk wird erst nach vollständigem Abschluss der Polymerisation und gegebenenfalls nach Abschluss einer zusätzlichen Pfropfreaktion vollständig, und damit diskontinuierlich, aus dem Reaktor entnommen.

Gemäß einer vorteilhaften Weiterbildung der Erfindung wird auch Wasser in den Siedekühler eingefüllt. Durch die Einleitung von Wasser in den Siedekühler erfolgt eine Spülung des Siedekühlers. Durch eine solche Spülung des Siedekühlers wird die Standzeit des Siedekühlers zusätzlich vorteilhaft verlängert.

Das Wasser wird dabei insbesondere von oben durch die Haube des Siedekühlers zugegeben und gelangt über den Siedekühler in den Reaktor. Vorzugsweise wird das Wasser zumindest teilweise von oben in mehrere vertikal verlaufende Rohre des Siedekühlers zugegeben.

Gemäß einer vorteilhaften Ausgestaltung der Erfindung wird das Wasser dabei zeitgleich mit der mindestens einen Komponente in den Siedekühler eingefüllt. Das Wasser wird also eingefüllt, während die Polymerisation des Acrylats in dem Reaktor stattfindet.

Gemäß einer anderen vorteilhaften Ausgestaltung der Erfindung wird das Wasser zeitlich nach der mindestens einen Komponente in den Siedekühler eingefüllt. Das Wasser kann dabei beispielsweise eingefüllt werden, während die Polymerisation des Acrylats in dem Reaktor noch stattfindet. Das Wasser kann aber auch erst dann eingefüllt werden, wenn die Polymerisation des Acrylats in dem Reaktor abgeschlossen ist.

Gemäß einer vorteilhaften Weiterbildung der Erfindung wird die mindestens eine Komponente teilweise direkt in den Reaktor eingefüllt. Insbesondere wird die mindestens eine Komponente beim Anfahren des Reaktors direkt in den Reaktor eingefüllt.

Die Aufgabe wird erfindungsgemäß auch durch ein System zur Polymerisation (mindestens) eines Acrylats mit den Merkmalen der Ansprüche gelöst. Das System zur Polymerisation von Acrylaten, umfasst einen Reaktor (50) und einen Siedekühler (40) zur Abführung von in dem Reaktor (50) entstehender Reaktionswärme, wobei der Siedekühler (40) mindestens eine Einfüllöffnung (46) zum Zuführen mindestens einer Komponente enthaltend Acrylat (oder bestehend aus Acrylat) aufweist, wobei der Reaktor (50) durch den Siedekühler (40) mittels einer Vakuumpumpe evakuierbar ist, um in dem Reaktor (50) einen erforderlichen Unterdruck in einem Bereich zwischen 150 mbar und 350 mbar zu erzeugen, wobei an die Vakuumpumpe eine Unterdruckleitung (35) angeschlossen ist, welche mit einem Dreiwegehahn (33) verbunden ist, und wobei der Dreiwegehahn (33) mittels einer Saugleitung (36) mit einer Haube (42) des Siedekühlers (40) und mittels einer Bypassleitung (34) mit einem unteren Bereich des Siedekühlers (40), welcher der Haube (42) gegenüberliegend und dem Reaktor (50) benachbart angeordnet ist, verbunden ist, und wobei die mindestens eine Einfüllöffnung (46) in einer Haube (42) des Siedekühlers (40) angeordnet ist, und wobei an die Haube (42) des Siedekühlers (40) eine Zuführleitung (32) angeschlossen ist, und wobei in der Haube (42) Düsen (48) derart angeordnet sind, dass die durch die mindestens eine Einfüllöffnung (46) zugeführte Komponente von oben auf vertikal verlaufende Rohre (44) des Siedekühlers (40) verteilt wird, und wobei die Zuführleitung (32), die Einfüllöffnungen (46) und die Düsen (48) des Siedekühlers (40) derart in der Haube (42) angeordnet sind, dass zugeführte Stoffe nicht von einem Unterdruck, den die Vakuumpumpe erzeugt, in die Saugleitung (36) eingesaugt und mitgerissen werden.

Ein gattungsgemäßes System zur Polymerisation eines Acrylats umfasst einen Reaktor, in welchem die Polymerisation stattfindet, und einen Siedekühler zur Abführung von in dem Reaktor entstehender Reaktionswärme. Der Reaktor ist derart mit dem Siedekühler verbunden, dass in dem Reaktor entstehende Reaktionswärme über den Siedekühler abgeführt wird, indem in dem Reaktor entstehende gasförmige Brüden dem Siedekühler zugeführt werden, und kondensierte Brüden von dem Siedekühler in den Reaktor zurück geführt werden.

Erfindungsgemäß weist der Siedekühler mindestens eine Einfüllöffnung zum Zuführen mindestens einer Komponente enthaltend Acrylat auf. Die in den Siedekühler zugeführte mindestens eine Komponente enthaltend Acrylat gelangt somit über den Siedekühler in den Reaktor.

Es wurde gefunden, dass die Standzeit des Siedekühlers deutlich verlängert werden kann, wenn die mindestens eine Komponente zumindest teilweise durch die Einfüllöffnung über den Siedekühler zugeführt wird und von dem Siedekühler in den Reaktor gelangt. Bei aus dem Stand der Technik bekannten Verfahren wird die Komponente direkt in den Reaktor eingefüllt.

Die mindestens eine Einfüll-Öffnung ist in einer Haube des Siedekühlers angeordnet. Die Haube des Siedekühlers ist dabei in einem oberen Bereich angeordnet und schließt den Siedekühler nach oben ab. Somit kann die mindestens eine Komponente von oben durch die Haube des Siedekühlers in den Siedekühler eingefüllt werden und fließt aufgrund der Schwerkraft in den Siedekühler hinein.

In der Haube des Siedekühlers sind Düsen angebracht. Die Düsen sind dabei derart angeordnet, dass die durch die mindestens eine Einfüllöffnung zugeführte mindestens eine Komponente von oben auf vertikal verlaufende Rohre des Siedekühlers verteilt wird. In diesen Rohren kondensieren die aus dem Reaktor aufsteigenden Brüden.

Vorteilhaft sind der Reaktor und der Siedekühler derart angeordnet, dass in dem Reaktor entstehende gasförmige Brüden entgegen der Schwerkraft in den Siedekühler aufsteigen, dort kondensieren, und in dem Siedekühler kondensierte Brüden mit der mindestens eine Komponente mit der Schwerkraft in den Reaktor fließen.

Mittels des erfindungsgemäßen Verfahrens sowie mittels des erfindungsgemäßen Systems ist polymerisiertes Acrylat oder Polyacrylat, insbesondere Acrylatkautschuk oder Polyacrylatkautschuk, insbesondere bevorzugt ein vernetzter Polyacrylatkautschuk, vorteilhaft herstellbar.

Der so hergestellte Acrylatkautschuk weist dabei zunächst keine Pfropfhülle auf. Durch Zugabe und Polymerisation von einem oder mehreren weiteren Monomeren in Gegenwart des Acrylatkautschuks kann ein gepfropfter Acrylatkautschuk erhalten werden. Bevorzugt kann mittels des erfindungsgemäßen Verfahrens ein gepfropfter Acrylatkautschuk erhalten werden, bestehend aus einer Acrylat-Pfropfgrundlage (Kern) und einer Pfropfhülle. Insbesondere kann die Pfropfhülle erhalten werden durch Polymerisation mindestens eines ethylenisch ungesättigten Monomers in Gegenwart des Acrylatkautschuks, wobei das Monomer ausgewählt ist aus Styrol, α-Methylstyrol, p-Methylstyrol, (Meth)acrylsäure-C₁-C₈-alkylester, Acrylnitril, Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexymaleimid und N-Phenylmaleimid);

Bevorzugt wird ein gepfropfter Acrylatkautschuk erhalten durch Emulsionspolymerisation in Gegenwart des Acrylatkautschuks von
Styrol oder Mischungen von Styrol und mindestens einem weiteren Monomer ausgewählt aus α-Methylstyrol, p-Methylstyrol und (Meth) acrylsäure-C₁-C₈-alkylester (z. B. Methylmethacrylat, Ethylmethacrylat, n-Butylacrylat, t-Butylacrylat); und
Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexymaleimid und N-Phenylmaleimid).

Mittels des erfindungsgemäßen Verfahren kann insbesondere ein Acrylnitril-Styrol-Acrylat-Copolymer (ASA) erhalten werden bestehend aus einem Kern aus Acrylatkautschuk, insbesondere einem vernetzten Acrylatkautschuk, und einer Pfropfhülle aus Styrol und Acrylnitril.

Der so hergestellte Pfropfkautschuk kann mit weiteren Polymeren vermischt werden, z.B. Styrol-Acrylnitril-Copolymer (SAN), als Matrix.

Ausführungsformen der Erfindung werden anhand der folgenden Zeichnung, der nachfolgenden Beschreibung und der Ansprüche näher erläutert.

Es zeigt:

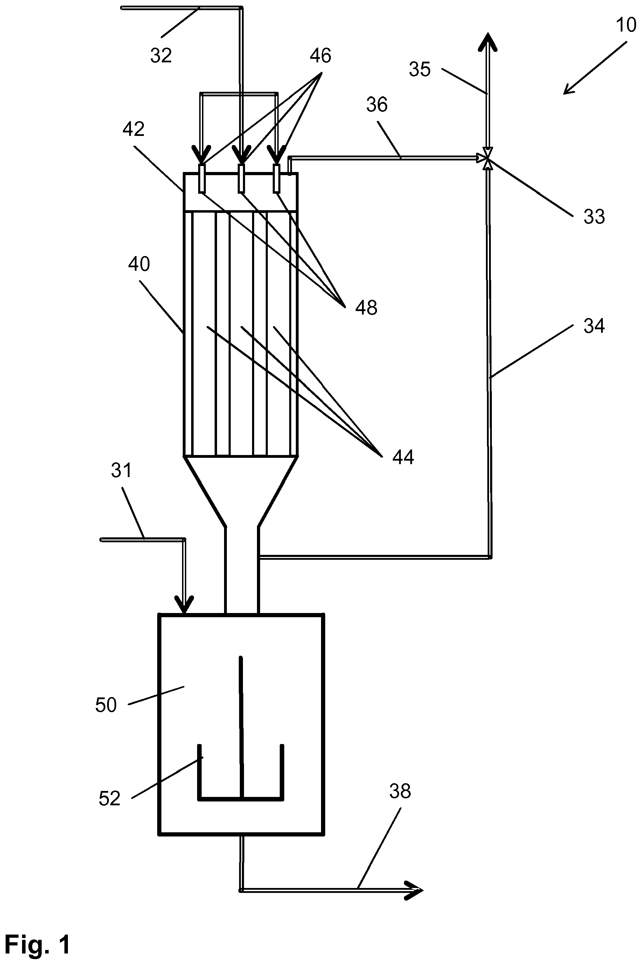

- Figur 1:: eine schematische Schnittdarstellung eines Systems zur Polymerisierung eines Acrylats.

In Figur 1 ist eine schematische Schnittdarstellung eines Systems 10 zur Polymerisierung eines Acrylats aus mindestens einer Komponente dargestellt. Das System 10 dient insbesondere, aber nicht ausschließlich, zur Herstellung von Acrylatkautschuk, insbesondere Butylacrylatkautschuk. Das System 10 umfasst einen Reaktor 50. In dem Reaktor 50 findet eine Polymerisation von zugeführten Monomeren statt. Innerhalb des Reaktors 50 ist ein Rührer 52 angeordnet. Der Rührer 52 ist mittels eines hier nicht dargestellten Elektromotors rotatorisch antreibbar. Es sind auch andere Arten von Reaktoren 50 einsetzbar, in welchen eine Polymerisation von zugeführten Monomeren stattfinden kann.

An den Reaktor 50 ist eine Einfüllleitung 31 angeschlossen. Die Einfüllleitung 31 dient der Zuführung von Stoffen direkt in den Reaktor 50. Zu den über die Einfüllleitung 31 dem Reaktor 50 direkt zugeführten Stoffen gehören insbesondere Wasser, ein Emulgator sowie ein Initiator. Aber auch Komponenten (Monomere) zur Herstellung des Acrylatkautschuk, welche insbesondere die oben beschriebenen Monomere enthalten, können teilweise über die Einfüllleitung 31 dem Reaktor 50 direkt zugeführt werden.

Weiter ist eine Entnahmeleitung 38 an den Reaktor 50 angeschlossen. Mittels der Entnahmeleitung 38 kann in dem Reaktor 50 hergestellter Acrylatkautschuk dem Reaktor 50 und dem System 10 entnommen werden.

Das System 10 umfasst ferner einen Siedekühler 40. Der Siedekühler 40 dient zur Abführung von Reaktionswärme, die bei der Polymerisation in dem Reaktor 50 entsteht. Der Siedekühler 40 ist vorliegend als Rohrbündelwärmetauscher ausgestaltet und umfasst mehrere vertikal verlaufende Rohre 44. Der Siedekühler 40 ist oben, also an einer dem Erdboden abgewandten Seite, mit einer Haube 42 verschlossen. Ferner umfasst der Siedekühler 40 einen hier nicht dargestellten Kühlmittelzulauf und einen hier ebenfalls nicht dargestellten Kühlmittelablauf.

Der Reaktor 50 ist derart mit dem Siedekühler 40 verbunden, dass die in dem Reaktor 50 bei der Polymerisation entstehende Reaktionswärme über den Siedekühler 40 abgeführt werden kann. Dabei werden in dem Reaktor 50 entstehende gasförmige Brüden dem Siedekühler 40 zugeführt, und kondensierte Brüden von dem Siedekühler 40 fließen in den Reaktor 50 zurück.

Innerhalb des Siedekühlers 40 steigen die in dem Reaktor 50 entstehenden gasförmigen Brüden in den vertikal verlaufenden Rohren 44 auf. Die Rohre 44 werden dabei von einem Kühlmittel umspült. Das Kühlmittel wird dem Siedekühler 40 durch den Kühlmittelzulauf zugeführt, umspült die vertikal verlaufenden Rohre 44 und tritt durch den Kühlmittelablauf wieder aus dem Siedekühler 40 aus. Dabei kühlt das Kühlmittel die Rohre 44 sowie darin vorhandene Brüden aus dem Reaktor 50. Dadurch kondensieren die Brüden, und die kondensierten Brüden fließen in den Reaktor 50 zurück.

In der Haube 42 des Siedekühlers 40 sind eine oder mehrere Einfüllöffnungen 46 angeordnet. Die Einfüllöffnungen 46 in der Haube 42 des Siedekühlers 40 dienen zur Zugabe von Stoffen, insbesondere von Komponenten zur Herstellung des Acrylatkautschuk, welche insbesondere Monomere enthalten, in den Siedekühler 40. In der Haube 42 des Siedekühlers 40 sind ferner mehrere Düsen 48 vorgesehen. Die Düsen 48 sind dabei mit den Einfüllöffnungen 46 verbunden. Stoffe, die durch die Einfüllöffnungen 46 in der Haube 42 des Siedekühlers 40 eingefüllt werden, gelangen somit zu den Düsen 48 in der Haube 42 des Siedekühlers 40.

Die Düsen 48 sind derart in der Haube 42 des Siedekühlers 40 angeordnet, dass Stoffe, die durch die Einfüllöffnungen 46 in den Siedekühler 40 eingefüllt werden, von oben auf die vertikal verlaufenden Rohre 44 des Siedekühlers 40 verteilt werden. Die durch die Einfüllöffnungen 46 in den Siedekühler 40 eingefüllten Stoffe fließen also mit der Schwerkraft in die vertikal verlaufenden Rohre 44 des Siedekühlers 40, in welchen die Brüden aus dem Reaktor 50 kondensieren.

An die Haube 42 des Siedekühlers 40 ist eine Zuführleitung 32 angeschlossen. Die Zuführleitung 32 dient der Zuführung von Stoffen in den Siedekühler 40. Zu den über die Einfüllleitung 32 dem Siedekühler 40 zugeführten Stoffen gehören insbesondere Komponenten zur Herstellung des Acrylatkautschuk, welche insbesondere Monomere enthalten. Aber auch Wasser kann über die Zuführleitung 32 in den Siedekühler 40 gegeben werden.

Die Zuführleitung 32 des Siedekühlers 40 ist dabei mit den in der Haube 42 des Siedekühlers 40 angeordneten Einfüllöffnungen 46 verbunden. Stoffe, die über die Zuführleitung 32 zugeführte werden, gelangen somit über die Einfüllöffnungen 46 zu den Düsen 48 in der Haube 42 des Siedekühlers 40 und von dort in die vertikal verlaufenden Rohre 44.

Der Reaktor 50 ist durch den Siedekühler 40 mittels einer hier nicht dargestellten Vakuumpumpe evakuierbar um in dem Reaktor 50 einen erforderlichen Unterdruck in einem Bereich zwischen 150 mbar und 350 mbar zu erzeugen. An die Vakuumpumpe ist eine Unterdruckleitung 35 angeschlossen, welche mit einem Dreiwegehahn 33 verbunden ist.

Der Dreiwegehahn 33 ist einerseits mittels einer Saugleitung 36 mit der Haube 42 des Siedekühlers 40 verbunden. Der Dreiwegehahn 33 ist andererseits mittels einer Bypassleitung 34 mit einem unteren Bereich des Siedekühlers 40 verbunden, welcher der Haube 42 gegenüberliegend und dem Reaktor 50 benachbart angeordnet ist.

Je nach Stellung des Dreiwegehahns 33 kann der Reaktor 50 also von der Vakuumpumpe über die Saugleitung 36 und die Unterdruckleitung 35 oder über die Bypassleitung 34 und die Unterdruckleitung 35 evakuiert werden.

Die Zuführleitung 32, die Einfüllöffnungen 46 und die Düsen 48 des Siedekühlers 40 sind dabei derart in der Haube 42 angeordnet, dass zugeführte Stoffe nicht von dem Unterdruck, den die Vakuumpumpe erzeugt, in die Saugleitung 36 eingesaugt und mitgerissen werden.

Zu Beginn der Polymerisation, insbesondere zur Herstellung von Acrylatkautschuk, werden zunächst Wasser, ein Emulgator sowie ein Initiator über die Einfüllleitung 31 dem Reaktor 50 zugeführt. Auch eine Komponente zur Herstellung von Acrylatkautschuk, die insbesondere Butylacrylat als Monomer enthält, kann dem Reaktor 50 über die Einfüllleitung 31 direkt zugeführt werden. Ebenso kann eine weitere Monomer-Komponente wie oben beschrieben, beispielsweise das (poly)funktionale vernetzende Monomer, dem Reaktor 50 über die Einfüllleitung 31 direkt zugeführt werden.

In dem Reaktor 50 findet unter Rühren mit dem Rührer 52 eine Polymerisation der zugeführten Monomere, insbesondere eine Emulsionspolymerisation, statt. Bei der Polymerisation entsteht Reaktionswärme. Die Reaktionswärme bewirkt, dass gasförmige Brüden aus dem Reaktor 50 in den Siedekühler 40 aufsteigen. Die in dem Reaktor 50 entstehenden gasförmigen Brüden steigen dabei in den vertikal verlaufenden Rohren 44 des Siedekühlers 40 auf und werden dort abgekühlt. Dadurch kondensieren die Brüden, und die kondensierten Brüden fließen in den Reaktor 50 zurück.

Mindestens eine über die Zuführleitung 32 dem Siedekühler 40 zugeführte Komponente enthält Butylacrylat und liegt in flüssiger Form vor. Es kann auch noch eine weitere Komponente zur Herstellung von Acrylatkautschuk, die vorzugsweise ein Monomer mit zwei Doppelbindungen enthält, über die Zuführleitung 32 dem Siedekühler 40 zugeführt werden.

Die besagten Stoffe werden über die Einfüllöffnungen 46 in der Haube 42 des Siedekühlers 40 in den Siedekühler 40 eingefüllt. Über die Düsen 48 in der Haube 42 des Siedekühlers 40 werden die Stoffe auf die vertikal verlaufenden Rohre 44 des Siedekühlers 40 verteilt. Dabei fließen die Stoffe von oben mit der Schwerkraft in die vertikal verlaufenden Rohre 44 des Siedekühlers 40.

Bedingt durch die Reaktionswärme, die durch die Polymerisation in dem Reaktor 50 entsteht, steigen weiterhin gasförmige Brüden entgegen der Schwerkraft aus dem Reaktor 50 in die vertikal verlaufenden Rohre 44 des Siedekühlers 40 auf. Dort werden die Brüden abgekühlt und kondensieren. Dabei findet eine Vermischung der kondensierten Brüden mit den Stoffen statt, die von oben mit der Schwerkraft in die vertikal verlaufenden Rohre 44 des Siedekühlers 40 eingefüllt werden. Die kondensierten Brüden fließen anschließend mit den in den Siedekühler 40 eingefüllten Stoffen mit der Schwerkraft in den Reaktor 50 zurück.

Während der hier beschriebenen Polymerisation des Acrylats herrscht in dem Reaktor 50 ein im Vergleich zum atmosphärischen Luftdruck verminderter Druck. Der Druck innerhalb des Reaktors 50 liegt dabei in einem Bereich zwischen 150 mbar und 350 mbar, vorzugsweise zwischen 200 mbar und 300 mbar, insbesondere bei etwa 250 mbar.

Das hier beschriebene Verfahren zur Polymerisierung eines Acrylats basiert auf einem diskontinuierlichen Prozess. Wasser, Emulgator und Initiator werden zunächst über die Einfüllleitung 31 in den Reaktor 50 eingefüllt. Nach Erreichen des erforderlichen Reaktionsunterdrucks und der benötigten Reaktionstemperatur wird mit der Zugabe der Komponenten, welche Monomere enthalten, begonnen. Die Zufuhr der Komponenten erfolgt zumindest in der Endphase der Polymerisation zumindest teilweise über die Zuführleitung 32 und den Siedekühler 40. Die Polymerisierung beginnt dabei in dem Reaktor 50 kurz nach dem Beginn des Zulaufs der benötigten Komponenten. Nach Ende des Zulaufs wird die Polymerisierung fortgesetzt, bis eine Umsetzung der Monomere zu, zumindest annähernd, 100% erfolgt ist.

Der hergestellte Acrylatkautschuk wird, gegebenenfalls nach einer Pfropfung, nach vollständigem Abschluss der Polymerisation in dem Reaktor 50 vollständig, und damit diskontinuierlich, durch die Entnahmeleitung 38 aus dem Reaktor 50 und damit auch aus dem System 10 entnommen. Nach einer anschließenden Reinigung des Reaktors 50 findet eine weitere Polymerisierung eines Acrylats zur Herstellung von Acrylatkautschuk als diskontinuierlicher Prozess statt. Ein solcher diskontinuierlicher Prozess wird auch als Batchprozess oder Chargenprozess bezeichnet.

Die Erfindung wird durch die Beispiele und Ansprüche weiter erläutert.

Bei einem aus dem Stand der Technik bekannten Verfahren zur Herstellung von Acrylatkautschuk (basierend auf Butylacrylat) werden die Komponenten ausschließlich direkt in den Reaktor 50 eingefüllt. Auch das Wasser wird ausschließlich direkt in den Reaktor 50 eingefüllt. Der hergestellte Acrylatkautschuk wird diskontinuierlich entnommen. Nach mehreren Monaten (z.B. 6-9 Monaten) bis zu einem Jahr hat sich in dem Siedekühler 40 so viel Polymer gebildet, dass die Wärmeabfuhr über den Siedekühler 40 behindert ist. Es ergibt sich häufig eine Standzeit zwischen sechs Monaten und einem Jahr.

In einem Versuch zur Herstellung von Acrylatkautschuk (auf Butylacrylat-Basis) mittels des erfindungsgemäßen Verfahrens in einem erfindungsgemäßen System 10 werden die Komponenten nur in der Anfahrphase direkt in den Reaktor 50 gefüllt und anschließend teilweise über den Siedekühler 40 zugegeben. Das Wasser wird ausschließlich direkt in den Reaktor 50 eingefüllt. Der hergestellte Acrylatkautschuk wird diskontinuierlich entnommen.

Es dauerte vorliegend über achtzehn Monate bis sich in dem Siedekühler 40 so viel Polymer gebildet hatte, dass die Wärmeabfuhr über den Siedekühler 40 signifikant behindert wurde. Es ergab sich also eine Standzeit von über achtzehn Monaten.

In einem weiteren Versuch zur Herstellung von Acrylatkautschuk (auf Butylacrylat-Basis) werden die Komponenten ausschließlich direkt in den Reaktor 50 eingefüllt. Das Wasser wird jedoch teilweise über den Siedekühler 40 zugegeben. Der hergestellte Acrylatkautschuk wird diskontinuierlich entnommen.

Es dauerte vorliegend über vierzehn Monate bis sich in dem Siedekühler 40 so viel Polymer gebildet hatte, dass die Wärmeabfuhr über den Siedekühler 40 signifikant behindert wurde. Es ergab sich also eine Standzeit von über vierzehn Monaten. Die Standzeit ist also um mindestens zwei Monate erhöht.

Die Behinderung der Wärmeabfuhr ist insbesondere an einer Verschlechterung der Druckkontrolle und einer Verschlechterung der Temperaturkontrolle bemerkbar. Ursache ist dabei meist eine Verstopfung der Rohre 44 des Siedekühlers. Prophylaktisch kann regelmäßig, beispielsweise alle sechs Monate, eine entsprechende Kontrolle durchgeführt werden. Im Rahmen einer solchen Kontrolle wird beispielsweise die Haube 42 des Siedekühlers 40 demontiert und die Rohre 44 des Siedekühlers 40 werden untersucht.

Bei Verwendung des aus dem Stand der Technik bekannten Verfahrens zur Herstellung von Acrylatkautschuk weisen häufig bereits nach einer Zeit von sechs bis zwölf Monaten etwa 20% der Rohre 44 des Siedekühlers 40 Verstopfungen auf.

Bei Verwendung des erfindungsgemäßen Verfahrens zur Herstellung von Acrylatkautschuk weisen die Rohre 44 nach einer Zeit von zwölf Monaten nur einen leichten Belag auf, und erst nach einer Zeit von achtzehn Monaten weisen etwa 10% bis 20% der Rohre 44 des Siedekühlers 40 Verstopfungen auf.

### Bezugszeichenliste

- 10: System
- 31: Einfüllleitung
- 32: Zuführleitung
- 33: Dreiwegehahn
- 34: Bypassleitung
- 35: Unterdruckleitung
- 36: Saugleitung
- 38: Entnahmeleitung
- 40: Siedekühler
- 42: Haube
- 44: Rohr
- 46: Einfüllöffnung
- 48: Düse
- 50: Reaktor
- 52: Rührer

## Patentansprüche

1. Verfahren zur Polymerisation von Acrylaten
mittels eines Reaktors (50), wobei
in dem Reaktor (50) entstehende Reaktionswärme über einen Siedekühler (40) abgeführt wird, indem
in dem Reaktor (50) entstehende gasförmige Brüden dem Siedekühler (40) zugeführt werden, und kondensierte Brüden von dem Siedekühler (40) in den Reaktor (50) zurück geführt werden,
**dadurch gekennzeichnet, dass**
mindestens eine Komponente enthaltend Acrylat zumindest teilweise über den Siedekühler (40) zugegeben wird und
über den Siedekühler (40) in den Reaktor (50) gelangt, und dass
in dem Reaktor (50) ein verminderter Druck, insbesondere in einem Bereich zwischen 150 mbar und 350 mbar erzeugt wird, und dass
während der Polymerisation des Acrylats in dem Reaktor (50) ein im Vergleich zum atmosphärischen Luftdruck verminderter Druck herrscht.

2. Verfahren nach Anspruch 1, **dadurch gekennzeichnet, dass**
die mindestens eine Komponente Butylacrylat enthält.

3. Verfahren nach einem der vorstehenden Ansprüche, **dadurch gekennzeichnet, dass** eine weitere Komponente, welche ein Monomer mit zwei Doppelbindungen enthält, zumindest teilweise in den Siedekühler (40) zugegeben wird.

4. Verfahren nach einem der vorstehenden Ansprüche, **dadurch gekennzeichnet, dass** die mindestens eine Komponente zumindest teilweise von oben durch eine Haube (42) des Siedekühlers (40) zugegeben wird.

5. Verfahren nach einem der vorstehenden Ansprüche, **dadurch gekennzeichnet, dass** die mindestens eine Komponente zumindest teilweise von oben in mehrere vertikal verlaufende Rohre (44) des Siedekühlers (40) zugegeben wird.

6. Verfahren nach einem der vorstehenden Ansprüche, **dadurch gekennzeichnet, dass** der Reaktor (50) durch den Siedekühler (40) mittels einer Vakuumpumpe über eine Unterdruckleitung (35) evakuiert wird.

7. Verfahren nach einem der vorstehenden Ansprüche, **dadurch gekennzeichnet, dass** die Polymerisation des Acrylats in dem Reaktor (50) als diskontinuierlicher Prozess durchgeführt wird.

8. Verfahren nach einem der vorstehenden Ansprüche, **dadurch gekennzeichnet, dass** Wasser in den Siedekühler (40) eingefüllt wird.

9. Verfahren nach Anspruch 8, **dadurch gekennzeichnet, dass** das Wasser zeitgleich mit der mindestens einen Komponente eingefüllt wird.

10. Verfahren nach einem der Ansprüche 8 bis 9, **dadurch gekennzeichnet, dass** das Wasser zeitlich nach der mindestens einen Komponente eingefüllt wird.

11. Verfahren nach einem der vorstehenden Ansprüche, **dadurch gekennzeichnet, dass** die mindestens eine Komponente teilweise direkt in den Reaktor (50) eingefüllt wird.

12. System zur Polymerisation von Acrylaten, umfassend
einen Reaktor (50) und
einen Siedekühler (40) zur Abführung von in dem Reaktor (50) entstehender Reaktionswärme,
**dadurch gekennzeichnet, dass**
der Siedekühler (40) mindestens eine Einfüllöffnung (46) zum Zuführen mindestens einer Komponente enthaltend Acrylat aufweist, und dass
der Reaktor (50) durch den Siedekühler (40) mittels einer Vakuumpumpe evakuierbar ist, um in dem Reaktor (50) einen erforderlichen Unterdruck in einem Bereich zwischen 150 mbar und 350 mbar zu erzeugen, wobei
an die Vakuumpumpe eine Unterdruckleitung (35) angeschlossen ist, welche mit einem Dreiwegehahn (33) verbunden ist, und wobei
der Dreiwegehahn (33) mittels einer Saugleitung (36) mit einer Haube (42) des Siedekühlers (40) und mittels einer Bypassleitung (34) mit einem unteren Bereich des Siedekühlers (40), welcher der Haube (42) gegenüberliegend und dem Reaktor (50) benachbart angeordnet ist, verbunden ist, und wobei
die mindestens eine Einfüllöffnung (46) in einer Haube (42) des Siedekühlers (40) angeordnet ist, und wobei
an die Haube (42) des Siedekühlers (40) eine Zuführleitung (32) angeschlossen ist, und wobei
in der Haube (42) Düsen (48) derart angeordnet sind, dass die durch die mindestens eine Einfüllöffnung (46) zugeführte Komponente von oben auf vertikal verlaufende Rohre (44) des Siedekühlers (40) verteilt wird, und wobei
die Zuführleitung (32), die Einfüllöffnungen (46) und die Düsen (48) des Siedekühlers (40) derart in der Haube (42) angeordnet sind, dass zugeführte Stoffe nicht von einem Unterdruck, den die Vakuumpumpe erzeugt, in die Saugleitung (36) eingesaugt und mitgerissen werden.

13. System nach Anspruch 12, **dadurch gekennzeichnet, dass**
der Reaktor (50) und der Siedekühler (40) derart angeordnet sind, dass
in dem Reaktor (50) entstehende Brüden entgegen der Schwerkraft in den Siedekühler (40) aufsteigen, und dass
in dem Siedekühler (40) kondensierte Brüden mit der mindestens einen Komponente mit der Schwerkraft in den Reaktor (50) fließen.

## Claims

1. A process for polymerizing acrylates by means of a reactor (50), where
heat of reaction arising in the reactor (50) is removed by means of an evaporative cooler (40) by
gaseous vapor formed in the reactor (50) being fed to the evaporative cooler (40) and condensed vapor being recirculated from the evaporative cooler (40) to the reactor (50),
**characterized in that**
at least one component containing acrylate is introduced at least partly via the evaporative cooler (40) and
goes via the evaporative cooler (40) into the reactor (50), and **in that**
a reduced pressure, in particular in the range from 150 mbar to 350 mbar, is generated in the reactor (50), and **in that**
a reduced pressure compared to atmospheric pressure prevails in the reactor (50) during the polymerization of the acrylate.

2. The process according to claim 1, **characterized in that**
the at least one component contains butyl acrylate.

3. The process according to any of the preceding claims, **characterized in that** a further component containing a monomer having two double bonds is at least partly introduced into the evaporative cooler (40).

4. The process according to any of the preceding claims, **characterized in that** the at least one component is at least partly introduced from above through a cap (42) of the evaporative cooler (40).

5. The process according to any of the preceding claims, **characterized in that** the at least one component is at least partly introduced from above into a plurality of vertical tubes (44) of the evaporative cooler (40).

6. The process according to any of the preceding claims, **characterized in that** the reactor (50) is evacuated through the evaporative cooler (40) by means of a vacuum pump via a subatmospheric pressure conduit (35).

7. The process according to any of the preceding claims, **characterized in that** the polymerization of the acrylate is carried out as discontinuous process in the reactor (50).

8. The process according to any of the preceding claims, **characterized in that** water is introduced into the evaporative cooler (40).

9. The process according to claim 8, **characterized in that** the water is introduced at the same time as the at least one component.

10. The process according to claim 8 or 9, **characterized in that** the water is introduced at a time after the at least one component.

11. The process according to any of the preceding claims, **characterized in that** the at least one component is partly introduced directly into the reactor (50).

12. A system for polymerizing acrylates, comprising
a reactor (50) and
an evaporative cooler (40) for removing heat of reaction arising in the reactor (50), **characterized in that**
the evaporative cooler (40) has at least one feed opening (46) for introducing at least one component containing acrylate, and **in that**
the reactor (50) can be evacuated through the evaporative cooler (40) by means of a vacuum pump in order to generate a required subatmospheric pressure in the range from 150 mbar to 350 mbar in the reactor (50), where
a subatmospheric pressure conduit (35) is connected to the vacuum pump and is joined to a three-way valve (33) and
the three-way valve (33) is connected by means of a suction conduit (36) to a cap (42) of the evaporative cooler (40) and by means of a bypass conduit (34) to a lower region of the evaporative cooler (40), which region is arranged opposite to the cap (42) and adjacent to the reactor (50), and wherein
the at least one feed opening (46) is arranged in a cap (42) of the evaporative cooler (40), and wherein
a feed conduit (32) is connected to the cap (42) of the evaporative cooler (40), and wherein
nozzles (48) are arranged in the cap (42) in such a way that the component introduced through the at least one feed opening (46) is distributed from above over vertical tubes (44) of the evaporative cooler (40), and wherein
the feed conduit (32), the feed openings (46) and the nozzles (48) of the evaporative cooler (40) are arranged in the cap (42) in such a way that materials fed in are not sucked in and carried into the suction conduit (36) by the subatmospheric pressure generated by the vacuum pump.

13. The system according to any claim 12, **characterized in that**
the reactor (50) and the evaporative cooler (40) are arranged in such a way that vapor formed in the reactor (50) ascends against the force of gravity into the evaporative cooler (40) and that
vapor condensed in the evaporative cooler (40) flows together with the at least one component under the force of gravity into the reactor (50).

## Revendications

1. Procédé de polymérisation d'acrylates
au moyen d'un réacteur (50), dans lequel
la chaleur de réaction générée dans le réacteur (50) est évacuée par un refroidisseur par évaporation (40), dans lequel
les vapeurs gazeuses générées dans le réacteur (50) sont envoyées au refroidisseur par évaporation ( 40) et les vapeurs condensées par le refroidisseur par évaporation (40) sont renvoyées dans le réacteur (50),
**caractérisé en ce que**
au moins un composant contenant de l'acrylate est ajouté, au moins en partie, par le refroidisseur par évaporation (40)
et parvient dans le réacteur (50) en passant par le refroidisseur par évaporation (40), et qu'une pression réduite est générée dans le réacteur (50), en particulier dans une plage comprise entre 150 mbar et 350 mbar, et que lors de la polymérisation de l'acrylate se produit dans le réacteur (50), une pression inférieure à la pression atmosphérique.

2. Procédé selon la revendication 1, **caractérisé en ce que** le au moins un composant contient de l'acrylate de butyle.

3. Procédé selon l'une quelconque des revendications précédentes, **caractérisé en ce qu'**un autre composant, comprenant un monomère ayant deux doubles liaisons, est ajouté au moins partiellement dans le refroidisseur par évaporation. (40).

4. Procédé selon l'une quelconque des revendications précédentes, **caractérisé en ce que** l'au moins un composant est au moins partiellement ajouté par le haut dans le carter (42) du refroidisseur par évaporation (40).

5. Procédé selon l'une quelconque des revendications précédentes, **caractérisé en ce que** l'au moins un composant est au moins partiellement ajouté depuis le haut dans plusieurs tubes verticaux (44) du refroidisseur par évaporation (40).

6. Procédé selon l'une quelconque des revendications précédentes, **caractérisé en ce que** le réacteur (50) est mis sous vide par le refroidisseur par évaporation (40) au moyen d'une pompe à vide via une conduite à pression inférieure (35).

7. Procédé selon l'une quelconque des revendications précédentes, **caractérisé en ce que** la polymérisation de l'acrylate dans le réacteur (50) est réalisée par un procédé opérant en discontinu.

8. Procédé selon l'une quelconque des revendications précédentes, **caractérisé en ce qu'**est introduite de l'eau dans le refroidisseur par évaporation (40).

9. Procédé selon la revendication 8, **caractérisé en ce que** l'eau est ajoutée en même temps qu'est ajouté l'au moins un composant.

10. Procédé selon l'une quelconque des revendications 8 ou 9, **caractérisé en ce que** l'eau est ajoutée après l'au moins un composant.

11. Procédé selon l'une des revendications précédentes, **caractérisé en ce que** le l'au moins un composant est ajouté par parties directement dans le réacteur (50).

12. Système de polymérisation d'acrylates, comprenant
un réacteur (50) et
un refroidisseur par évaporation (40) pour dissiper la chaleur de réaction générée dans le réacteur (50),
**caractérisé en ce que**
le refroidisseur par évaporation (40) comporte au moins un orifice de remplissage (46) pour l'alimentation d'au moins un composant contenant de l'acrylate, et
**en ce que**
le réacteur (50) peut être évacué par l'intermédiaire du refroidisseur par évaporation (40) à l'aide d'une pompe à vide afin de générer dans le réacteur (50) une pression plus basse comprise entre 150 mbar et 350 mbar, **en ce que**,
à la pompe à vide est reliée une conduite de pression inférieure (35) qui est reliée à une vanne à trois voies (33), et **en ce que**
la vanne à trois voies (33) est reliée au moyen d'une conduite d'aspiration (36) à un carter (42) du refroidisseur par évaporation (40) et est reliée au moyen d'une conduite de dérivation (34) à une zone inférieure du refroidisseur par évaporation (40) qui est disposée en face du carter (42) et qui est proche du réacteur (50),
et **en ce que** au moins un orifice de remplissage (46) est disposée dans le carter (42) du refroidisseur par évaporation (40), et dans lequel
une conduite d'alimentation (32) est raccordée au carter (42) du refroidisseur par évaporation (40)
et **en ce que**
dans le carter (42) sont disposées des buses (48) de sorte que le composant, amené depuis le haut en passant au moins par un orifice de remplissage (46), se répartisse sur les tuyaux (44), disposés verticalement, du refroidisseur par évaporation (40), et dans lequel la conduite d'alimentation (32), les ouvertures de remplissage (46) et les buses (48) du refroidisseur par évaporation (40) se trouvent ainsi situées dans le carter (42) disposées de manière à ce que les substances amenées ne soient pas aspirées dans la conduite d'aspiration (36) et donc entraînées par une pression négative générée par la pompe à vide.

13. Système selon la revendication 12, **caractérisé en ce que** le réacteur (50) et le refroidisseur par évaporation (40) sont disposés de telle sorte que les vapeurs provenant du réacteur (50) montent à l'encontre de la gravité dans le refroidisseur par évaporation (40), et **en ce que**
les vapeurs condensées (40) ainsi que l'au moins un composant s'écoule par gravité depuis le refroidisseur par évaporation (40) vers le réacteur (50).
